# EUROPEAN PATENT SPECIFICATION

(11) **EP 3 312 236 B1**
(45) Date of publication and mention of the grant of the patent: **15.05.2019**
(21) Application number: 17196428.1
(22) Date of filing: 13.10.2017
(51) Int. Cl.: C08L 21/00, B60C 19/00, B60C 1/00, B29D 30/00, C09J 183/04

(54) **TIRE WITH REDUCED CAVITY NOISE AND METHOD FOR MANUFACTURING THE SAME**
REIFEN MIT REDUZIERTEM HOHLRAUMRAUSCHEN UND VERFAHREN ZUR HERSTELLUNG DAVON
PNEU À FAIBLE BRUIT DE CAVITÉ ET SON PROCÉDÉ DE FABRICATION

(30) Priority: 24.10.2016 KR 20160138292
(43) Date of publication of application: 25.04.2018
(73) Proprietor: Hankook Tire Co., Ltd., Seoul 135-723 (KR)
(72) Inventor: Seo, Byeong Ho, 34127 Daejeon (KR)
(74) Representative: Petraz, Gilberto Luigi

(56) References cited:
- EP-A1- 2 138 331
- EP-A1- 2 937 231
- EP-A2- 2 554 617
- WO-A1-2015/165899
- WO-A1-2016/051371
- US-A1- 2005 155 686
- US-A1- 2013 087 267

## Description

### Technical Field

The present invention relates to a tire with reduced cavity noise and a method for manufacturing the same. More particularly, the invention relates to a tire with reduced cavity noise, for which the adhesive force of an adhesive that is used for a tire with reduced cavity noise has been increased by a method for increasing the adhesive force of an adhesive while avoiding contamination of the inside of a tire, or by using an inner liner including a laser light-treated surface, and also relates to a method for manufacturing such a tire.

### Background Art

As the government restrictions in relation to car noise are being strengthened and the demand for electric cars is ever increasing, the request for reducing the noise generated from tires tends to gradually increase. Meanwhile, according to the recent trend of development, attention is paid to an ultrahigh performance (UHP) tire having a wide tread that is brought into contact with the road surface and having a low flatness ratio of sidewalls, which correspond to the lateral sides of a tire. Such a tire has increased rigidity of sidewalls due to structural characteristics, and is not able to perform the role of appropriately damping the impact transferred from the road surface within the tire structure. Therefore, such a tire brings about a result of increasing the sound pressure, which is related to noise generation. This produces air vibration in the cavity of the tire so that noise is transferred even to the inside of the vehicle, and the driver may notice this noise. Thus, this causes deterioration of ride comfort during driving (hereinafter, noise caused by air vibration will be collectively referred to as cavity noise).

An example of conventional technologies for reducing the cavity noise is a technology of utilizing foam of a polyurethane material having open cells. However, in the case of using a general liquid adhesive in order to attach such foam of a polyurethane material to an inner liner on the inner side of a tire, there has been a problem that the adhesive is absorbed by a sound-absorbing material layer, and the sound absorbing power and the adhesive power are markedly deteriorated.

Even in a case in which an adhesive that is cured by light or heat is used instead of a liquid adhesive (JP 2015-166134 A), the initial adhesive power may be excellent. However, there is a problem that the adhesive has low deformation force such as elasticity, and in a state in which the tire has been deformed by the load of the vehicle, the adhesive cannot endure repeated deformations and vibrations that are additionally exerted to the adhesive, and is destroyed, resulting in the occurrence of delamination or loss of the sound absorbing material.

In the case of applying a butyl-based hot melt adhesive, the adhesive may be sufficiently stretched even under deformation of the tire, and an external impact can be relieved. However, due to the characteristics of hot melt type adhesives, as the temperature increases, viscosity decreases and fluidity increases. Thus, the position of the sound absorbing material attached inside the tire may be changed during driving, and such a change may bring about adverse effects on the tire balance or uniformity.

There are patent documents disclosing the use of silicone-based adhesives or silane-modified polyester adhesives; however, there is a problem that the surface adhesive force is decreased as a result of transfer of contaminants on the surface of the inner liner inside the tire or transfer of a bladder release agent, and the adhesion characteristics become weak due to the extensive heat and deformation generated in the tire during driving.

Document EP-A-2.554.617 discloses tire with foamed noise damper.

Document US-A-2013/0087267 discloses a method of making pneumatic tire with foam noise damper.

Document WO-A-2015/165899 discloses a tire comprising a strip of damping foam.

Document US-A-2005/155686 discloses an assembly of pneumatic tire and rim, a sound suppressing body used for the assembly and a pneumatic tire storage method.

Document EP-A-2.138.331 discloses a method for manufacturing pneumatic tire enabling a sound-absorbing member to be mounted on the tire with fixation of the sound-absorbing member onto an inner surface of the tire.

Document WO-A-2016/051371 discloses a soundproof ture for vehicle wheels.

Document EP-A-2.937.231 discloses a cavity noise reduction tire.

Thus, in order to solve such problems of adhesives as described above and to attach a sound absorbing material for reducing the cavity noise of a tire to the inner liner, it is required to use a special surface configuration and an adhesive that can endure deformation of the tire and heat generation.

### SUMMARY OF INVENTION

An object of the present invention is to provide a tire with reduced cavity noise, for which the adhesive force of an adhesive that is used for a tire with reduced cavity noise has been increased by a method that does not contaminate the inside of a tire or by a method of surface-treating the inner liner with laser light, in order to increase the adhesive force of the adhesive.

Another object of the invention is to provide a tire in which the cavity noise generated by air vibration inside the tire among the noises made by a tire has been reduced by attaching a sound absorbing material with an adhesive having strong durability.

Another object of the invention is to provide a tire in which the cavity noise reduction performance is maintained until the end of the tire wear lifetime without delamination or loss of a sound absorbing material even in the circumstances of temperature change of the tire during driving or deformation of the tire caused by the vehicle weight and external impacts, by treating the tire with a method that does not contaminate the inside of the tire or a method of using a special adhesive together with a surface treatment.

According to an aspect of the present invention, there is provided a tire with reduced cavity noise, the tire including an inner liner, an adhesive layer applied on the inner side of the inner liner, and a sound absorbing material layer attached to the adhesive layer.

The adhesive layer may include any one adhesive selected from the group consisting of a silicone-based adhesive, a polyether-based modified silane adhesive, an adhesive synthesized from a polyether-modified silane and urethane in combination, a urethane-based adhesive, an acrylic adhesive, an epoxy-based adhesive, and a mixture thereof.

The silicone-based adhesive may contain a chemical structure represented by the following Chemical Formula (3): 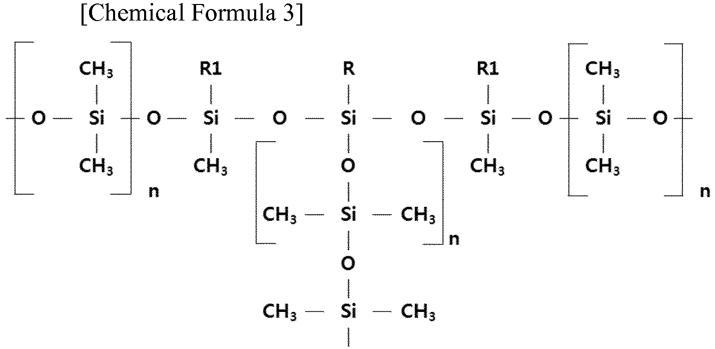 wherein R represents any one selected from the group consisting of a silanol group, an alkyl group, an aryl group, an alkoxy group, and an acryl group; R1 represents any one hydrolyzable group selected from the group consisting of an acetate, an alkoxy, an oxime, benzamide, or a combination thereof, or a hydrolyzable group containing an amine; and n represents an integer from 1 to 500.

The sound absorbing material layer may contain a polyurethane foam.

The tire with reduced cavity noise may be a tire without a release agent layer between the inner liner and the adhesive layer.

The inner liner includes a laser light-treated surface.

The inner liner including a laser light-treated surface may include a structure-modified region formed by irradiating the surface of the inner liner with laser light, and the structure-modified region may have any one shape selected from the group consisting of a dot, a line, a plane, a plurality of dots, a plurality of lines, a plurality of planes, and a combination of these.

The structure-modified region may include a plurality of plane shapes arranged at a certain interval along the circumferential direction of the tire.

The structure-modified region may be composed of planes, and the tire may include the structure-modified region at a proportion of 20% to 80% by area with respect to the total area of the inner liner.

The laser may be any one selected from the group consisting of a fiber laser, a diode laser, a diode pumped solid state (DPSS) laser, a krypton fluoride (KrF) excimer laser, an argon fluoride (ArF) excimer laser, a nanosecond laser, a femtosecond laser, an attosecond laser, and a carbon dioxide laser.

The tire with reduced cavity noise may include a release agent layer between the inner liner and the adhesive layer, and the release agent layer may include a laser light-treated surface.

The inner liner including a laser light-treated surface may include a structure-modified region formed by irradiating the surface of the inner liner with laser light, and the structure-modified region may have any one shape selected from the group consisting of a dot, a line, a plane, a plurality of dots, a plurality of lines, a plurality of planes, and a combination of these.

The structure-modified region may include a plurality of plane shapes arranged at a certain interval along the circumferential direction.

The structure-modified region may be composed of planes, and the tire may include the structure-modified region at a proportion of 20% to 80% by area with respect to the total area of the inner liner.

The laser may be any one selected from the group consisting of a fiber laser, a diode laser, a diode pumped solid state (DPSS) laser, a krypton fluoride (KrF) excimer laser, an argon fluoride (ArF) excimer laser, a nanosecond laser, a femtosecond laser, an attosecond laser, and a carbon dioxide laser.

According to another aspect of the present invention, there is provided a method for manufacturing a tire with reduced cavity noise, the method including a step of forming a green tire including an inner liner; a step of placing the green tire over a bladder such that the inner liner and the bladder are in direct contact, without performing a step of applying a release agent on the inner liner inside the green tire; a step of expanding the interior of the green tire using the bladder and producing a cured tire; a step of applying an adhesive on the surface of the inner liner and forming an adhesive layer; and a step of attaching a sound absorbing material to the adhesive layer.

The manufacturing method further includes a step of irradiating the inner liner inside the cured tire with laser light, between the step of expanding the interior of the green tire using a bladder and the step of applying an adhesive on the surface of the inner liner and forming an adhesive layer.

According to another aspect of the present invention, there is provided a method for manufacturing a tire with reduced cavity noise, the method including a step of forming a green tire including an inner liner; a step of applying a release agent on the inner liner inside the green tire, subsequently placing the green tire over a bladder, expanding the interior of the green tire using the bladder, and thereby producing a cured tire; a step of irradiating the inner liner inside the cured tire with laser light; a step of applying an adhesive on the surface of the inner liner that has been irradiated with laser light and forming an adhesive layer; and a step of attaching a sound absorbing material to the adhesive layer.

In regard to the tire according to the invention, since the tire is treated in order to increase the adhesive force of an adhesive, by a method that does not contaminate the interior of the tire, or by surface-treating the surface of an inner liner that has been contaminated with a release agent, with laser light, and then a sound absorbing material is attached to the inner liner with an adhesive, the cavity noise generated by air vibration in the interior of a tire among tire noises can be reduced, while the tire lifetime can be kept long.

According to the present invention, a tire in which contaminants that may deteriorate the adhesive force are fundamentally eliminated, a sound absorbing material is attached using an adhesive having strong durability, and thus the cavity noise reduction performance is maintained until the end of the tire wear lifetime, without delamination or loss of the sound absorbing material caused by detachment of the adhesive even in the circumstances of temperature change of the tire during driving or deformation of the tire caused by the vehicle weight and external impacts.

### BRIEF DESCRIPTION OF DRAWINGS

FIG. 1 is a lateral cross-sectional view of a pneumatic tire according to an embodiment of the invention.
FIG. 2 to FIG. 4 are photographs showing examples of a structure-modified region formed by irradiation with laser light according to an embodiment of the invention.

### DESCRIPTION OF EMBODIMENTS

Hereinafter, the invention will be explained in more detail.

The tire with cavity noise reduction according to an embodiment of the invention includes an inner liner that is not contaminated with a release agent inside the tire, or an inner liner including a surface that has been treated with laser light; an adhesive layer applied on the inner side of the inner liner; and a sound absorbing material layer attached to the adhesive layer.

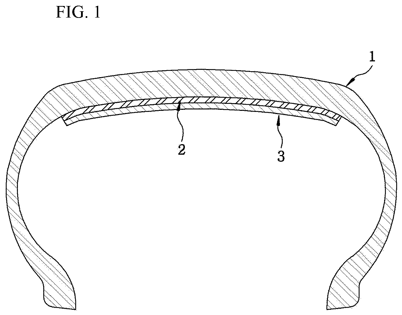

A lateral cross-sectional view of the pneumatic tire according to an embodiment of the invention is presented in FIG. 1. According to FIG. 1, the pneumatic tire (1) according to the invention includes an adhesive layer (2) applied on the inner side surface of the inner liner, and also includes a sound absorbing material layer (3) attached to the adhesive layer (2).

The adhesive layer (2) may be formed from any one adhesive selected from the group consisting of a silicone-based adhesive, a polyether-based modified silane adhesive, an adhesive synthesized from a polyether-modified silane and urethane, a urethane-based adhesive, an acrylic adhesive, an epoxy-based adhesive, and a mixture thereof.

Regarding the adhesive, a silicone-based adhesive can be preferably used. Specifically, the silicone-based adhesive may include a polyorganosiloxane and an organosilicon. Examples of the silicone-based adhesive include those adhesives described in, for example, EP 0 118 030 A, EP 0 316 591 A, EP 0 327 847 A, EP 0 553 143 A, DE 195 49 425 A, and US 4 417 042 B, which are known to those ordinarily skilled in the pertinent art.

The polyorganosiloxane (-Si-O-Si-) is a polymer based mainly on a chain comprising siloxane bonds substituted with organic groups, and specifically, the polyorganosiloxane may be any one selected from the group consisting of tetramethyldisiloxane, tetraphenyldisiloxane, hexamethyldisiloxane, and hexaphenyldisiloxane.

The organosilicon may be a compound containing any one hydrolyzable group selected from the group consisting of an acetate, an alkoxy, an oxime, benzamide, and a combination thereof, or a hydrolyzable group containing an amine.

More specifically, the silicone-based adhesive containing a polyorganosiloxane and an organosilicon may contain a polyorganosiloxane repeating unit represented by the following Chemical Formula (1), and an organosilicon unit represented by the following Chemical Formula (2). The organosilicon unit may be disposed between the polyorganosiloxane repeating units. Furthermore, the terminals of the silicone-based adhesive may be substituted with hydroxyl groups.

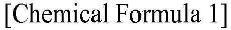

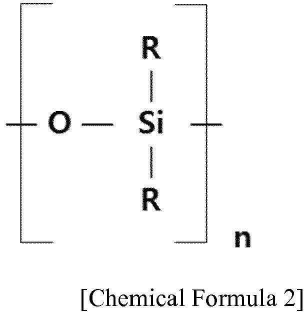

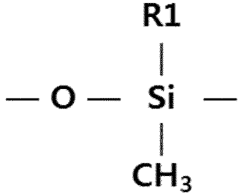

In the formulae, R represents any one selected from the group consisting of a silanol group, an alkyl group, an aryl group, an alkoxy group, and an acryl group; and R1 represents any one hydrolyzable group selected from the group consisting of an acetate, an alkoxy, an oxime, benzamide, and a combination thereof, or a hydrolyzable group containing an amine. That is, the silicone-based adhesive may contain a plurality of organosilicon units, and R1 in a portion of the organosilicon units may represent any one hydrolyzable group selected from the group consisting of an acetate, an alkoxy, an oxime, benzamide, and a combination thereof, while R1 in another portion of the organosilicon units may be a hydrolyzable group containing an amine. n may represent an integer from 1 to 500, and may be specifically 15 to 100.

The alkoxy hydrolyzable group may be an alkoxy group having 1 to 20 carbon atoms, and specific examples thereof include a methoxy group, an ethoxy group, a n-propyloxy group, an i-propyloxy group, a n-butoxy group, an i-butoxy group, a t-butoxy group, a n-pentyloxy group, an i-pentyloxy group, a n-hexyloxy group, an i-hexyloxy group, a n-heptyloxy group, an i-heptyloxy group, a n-octyloxy group, and an i-octyloxy group.

The oxime (-C=NOH) hydrolyzable group may be an aldoxime, a ketoxime, or an amidoxime.

The benzamide hydrolyzable group may be benzamide (C₆H₅CONH₂) or a derivative thereof.

Furthermore, the hydrolyzable group containing an amine may be an alkylamine or a dialkylamine, and may be specifically an alkylamine or a dialkylamine, both having an alkyl group having 1 to 20 carbon atoms. More specific examples include ethylamine, hexylamine, n-propylamine, and dibutylamine.

The silicone-based adhesive containing a polyorganosiloxane and an organosilicon may contain a chemical structure represented by the following Chemical Formula (3): 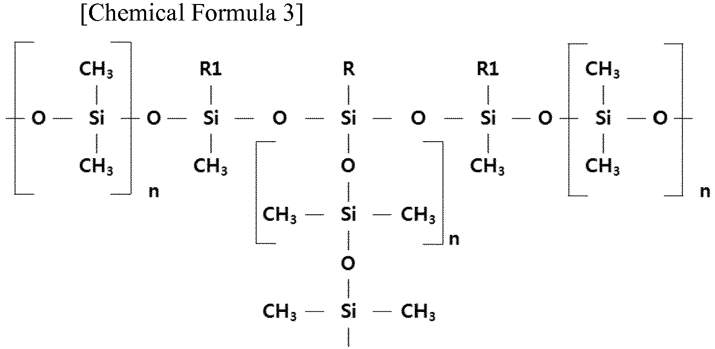 wherein R represents any one selected from the group consisting of a silanol group, an alkyl group, an aryl group, an alkoxy group, and an acryl group; R1 represents any one hydrolyzable group selected from the group consisting of an acetate, an alkoxy, an oxime, benzamide, and a combination thereof, or a hydrolyzable group containing an amine; and n may represent an integer from 1 to 500, and specifically 15 to 100.

The compound represented by Chemical Formula (3) has a main chain of polyorganosiloxane, and the terminals thereof each contain a hydroxyl group. The compound is moisture-curable compound, and is a solvent-free adhesive that undergoes curing when a chemical reaction is initiated by the moisture in air or the moisture adhering to the surface of an adherend. The compound has a feature that after curing, the compound has fewer temperature-induced changes in the physical properties, maintains its adhesive force and elasticity over a wide temperature range of from -50°C to 200°C, and exhibits excellent weather resistance and durability.

Particularly, a plurality of R1's may each independently represent any one hydrolyzable group selected from the group consisting of an acetate, an alkoxy, an oxime, benzamide, and a combination thereof, or a hydrolyzable group containing an amine, and curing of the adhesive proceeds as a result of a hydrolytic condensation reaction of these groups and a condensation reaction brought by a catalyst and moisture. Therefore, when the adhesive is exposed to air, some of the hydrolyzable groups are substituted with alcohol (OH) by means of moisture, and a condensation reaction between polymer molecules occurs, resulting in crosslinking of the polymer. Thus, the strength of the adhesive is maintained.

The adhesive layer (2) may further include known additives, for example, a tackifier, a curing agent, a smoothing agent, a wetting agent, a flow regulating agent, a film-forming inhibitor, an antifoaming agent, a filler (for example, chalk, lime, a powder, precipitated or fumed silica, aluminum silicate, or a high-boiling point wax), a viscosity regulating agent, a plasticizer, a pigment, a dye, an ultraviolet absorber, a stabilizer against thermal decomposition, and a stabilizer against oxidative decomposition.

The adhesive layer (2) can maintain the cavity noise reduction performance until the end of the tire wear lifetime, without undergoing denaturation caused by the vehicle weight and external impacts, or without detachment, delamination or loss of the sound absorbing material in a high-temperature environment as well as in a low-temperature environment.

It is preferable that the sound absorbing material layer (3) contains a polyurethane foam as a sound absorbing material.

The polyurethane foam may be basically a product produced by subjecting a polyisocyanate compound and a polyol to a urethane reaction.

The polyurethane foam refers to a polyurethane-based sound absorbing material having open cells and may have a density of 25 to 35 kg/m³.

A polyurethane foam having open cells has a problem that an adhesive having low viscosity is excessively absorbed by the polyurethane foam and is not easily adhered to the inner liner. However, since a silicone-based adhesive has high viscosity and elasticity, a silicone-based adhesive is absorbed only at the surfaces of the open cells, so that the adhesive force is not decreased, and even in the circumstances of high deformation, durability of the adhesive layer is secured. Therefore, a silicone-based adhesive is adequate for adhesion to polyurethane foam.

However, in the case of applying the adhesive to the inner liner, the inner liner is contaminated due to the release agent that is conventionally used at the time of tire curing, and a rim release agent that is added during a tire inspection process is incorporated in the course of application of the adhesive on the tire and mounting and dismounting of the tire on the rim, and contaminates the interior of the inner liner. Therefore, there may be a problem of deteriorated adhesive force. In the case of production in small quantities, the release agent treatment step may be omitted; however, in a case in which the release agent application step is omitted in order to solve the problems described above, the life span of the bladder rubber that provides a large quantity of heat to the interior of the tire during the tire curing step is markedly decreased, and there may be a problem that the physical properties and productivity of the tire are deteriorated.

The present invention can solve the problems described above, by surface treating a non-contaminated inner liner that has been cured without a release agent, by irradiating the surface of the inner liner with laser light. Furthermore, even in the case of producing the tire by incorporating a release agent, the release agent can be completely eliminated by surface-treating the inner liner by irradiating the surface of the inner liner with laser light, and thereby the problems described above can be solved.

An inner liner including a laser light-treated surface may include a structure-modified region formed by irradiating the surface of the inner liner with laser light, and the shape of the structure-modified region may be any one shape selected from a dot, a line, a plane, a plurality of dots, a plurality of lines, a plurality of planes, and a combination of these. Furthermore, the structure-modified region may be formed into a shape in which the surface of the inner liner is dented by the laser light treatment, or may be formed into a crumpled shape resulting from melting of the inner liner surface caused by the heat generated by the laser light treatment, followed by solidification of the surface.

The structure-modified region may have any one shape selected from the group consisting of a dot, a line, a plane, a plurality of dots, a plurality of lines, a plurality of planes, and a combination of these, and in a case in which the structure-modified region has a shape composed of a plurality of dots, a plurality of lines, or a plurality of planes, the shape may have a regular arrangement or may be formed irregularly.

In a case in which the shape of the structure-modified region is composed of a plurality of lines, the shape of a plurality of lines may have any one pattern selected from the group consisting of a striped pattern, a lattice pattern, a polygonal pattern, a circular pattern, and a combination thereof.

The structure-modified region may have a plurality of planes arranged at a certain interval along the circumferential direction of the tire. Specifically, the structure-modified region may have a plurality of rectangular-shaped planes arranged at a certain interval along the circumferential direction.

Specifically, it is preferable that the structure-modified region is composed of planes, and the tire includes the structure-modified region at a proportion of 20% to 80% by area with respect to the total area of the inner liner

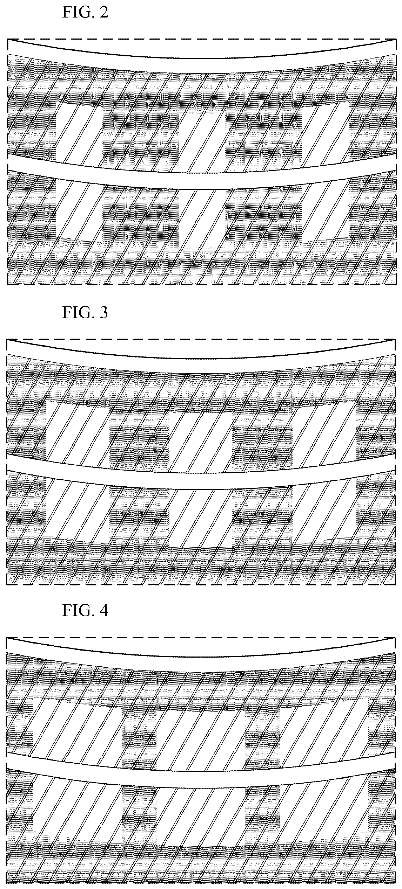

The structure-modified region composed of planes is presented in FIG. 2 to FIG. 4. FIG. 2 shows the case in which the structure-modified region occupies 25%, FIG. 3 shows the case in which the structure-modified region occupies 50%, and FIG. 4 shows the case in which the structure-modified region occupies 75%.

If the area of the structure-modified region is less than 20% by area, the effect of modifying the inner liner surface may be negligible, and if the area is more than 80% by area, the area of the structure-modified region is excessively large, and the performance of the inner liner may be degraded.

The laser light treatment may be carried out to a depth of 1 to 100 µm; however, specifically, it is preferable that the laser light treatment is carried out to a depth of 1 to 20 µm, in order to reduce any damage to the inner liner.

Regarding the laser, any one selected from the group consisting of a fiber laser, a diode laser, a diode pumped solid state (DPSS) laser, a krypton fluoride (KrF) excimer laser, an argon fluoride (ArF) excimer laser, a nanosecond laser, a femtosecond laser, an attosecond laser, and a carbon dioxide laser, can be used, and a fiber laser is most preferably used.

The wavelength of the laser light may be from 1,000 to 2,000 nm, preferably from 1,010 to 1,070 nm, and most preferably from 1,030 to 1,070 nm. If the wavelength of the laser light is larger than 2,000 nm, the laser light may penetrate the inner liner. The laser power employed at the time of irradiation with laser light may be 1 to 750 W, and the laser speed may be 1 to 40 mm/s.

The tire with reduced cavity noise according to the invention is manufactured by a series of the steps of mixing, extrusion, calendering, cutting, building, curing, and inspection.

Specifically, the method for manufacturing the tire with reduced cavity noise may include a step of forming a green tire including an inner liner; a step of placing the green tire over a bladder such that the inner liner and the bladder are in direct contact, expanding the interior of the green tire using the bladder, and thereby producing a cured tire; a step of applying an adhesive on the surface of the inner liner and forming an adhesive layer; and a step of attaching a sound absorbing material to the adhesive layer, and the method may not include a step of applying a release agent on the inner liner inside the green tire.

This manufacturing method may further include a step of irradiating the inner liner inside the cured tire with laser light, between the step of expanding the interior of the green tire using a bladder and thereby producing a cured tire and a step of applying an adhesive ont eh surface of the inner liner and forming an adhesive layer.

The tire with reduced cavity noise may also be manufactured by a manufacturing method including a step of forming a green tire including an inner liner; a step of applying a release agent on the inner liner inside the green tire, subsequently placing the green tire over a bladder, expanding the interior of the green tire using the bladder, and thereby producing a cured tire; a step of irradiating the inner liner inside the cured tire with laser light; a step of applying an adhesive on the inner liner surface that has been irradiated with laser light, and forming an adhesive layer; and a step of attaching a sound absorbing material to the adhesive layer.

Hereinafter, Examples of the present invention will be described in detail so that any person having ordinary skill in the art to which the present invention is pertained can easily carry out the invention. However, the present invention can be realized in various different embodiments, and is not intended to be limited to the Examples explained herein.

### [Production Example 1: Silicone-based adhesive]

A silicone-based adhesive containing a polyorganosiloxane and an organosilicon (LOCTITE 5900 series of Henkel AG & Co. KGaA) was purchased and used.

### [Production Example 2: Production of tire with reduced cavity noise]

### <Example 1>

A green tire was formed. The green tire was placed over a bladder such that the inner liner inside the green tire and the bladder were in direct contact, without performing a release agent treatment, and the interior of the green tire was expanded using the bladder. Thus, a cured tire was produced. The inner liner of the cured tire was irradiated with fiber laser light (wavelength 1,060 nm, power 750 W).

The silicone-based adhesive purchased in Production Example 1 was applied on the inner liner including a laser light-treated surface, and then a polyurethane sound absorbing material was attached thereto.

### <Comparative Example 1>

A green tire was formed. A bladder was treated with a release agent, and the green tire was placed over the bladder and then was expanded. Thus, a cured tire was produced. The silicone-based adhesive purchased in Production Example 1 was applied on the inner liner of the cured tire, and then a polyurethane sound absorbing material was attached thereto.

### [Test Example 1: Evaluation of adhesive force]

The physical properties of the tires with reduced cavity noise produced in Example 1 and Comparative Example 1 were measured, and the results are presented in the following Table 1.

**[Table 1]**

| Evaluation | Remarks | Example 1 | Comparative Example 1 |
|---|---|---|---|
| Evaluation of attachment (using a weight) | High temperature (80°C) | Maintained attachment for 120 hours | Delamination after 70 hours |
| Evaluation of attachment after aging (using a weight) | High temperature (80°C) | Maintained attachment for 120 hours | Delamination after 44 hours |
| Evaluation of adhesive force | Peeling test (N/cm) | 210 | 130 |
| Evaluation of adhesion aging (100°C, 7 days) | Peeling test (N/cm) | 270 | 100 |
| High-speed driving test | Presence of delamination/loss | No delamination/loss | Delamination by 30 mm |

In regard to the evaluation of attachment, a 2-kg weight was hanged from the sound absorbing material, and the time for attachment in a static state was measured. In regard to the evaluation of attachment after aging, the tire was left to stand for 7 days in an atmosphere at 100°C, and then the evaluation of attachment was performed.

The high-speed driving test was performed by driving the car at a speed of 100 km/h for 5 minutes in order to prevent early destruction of tire, and then driving the car at the maximum driving speed (250 km/h) for 5 minutes, and repeating this 11 times (chamber angle: -1.5 degrees, tire pressure: 2.4 bar)

According to Table 1, in Comparative Example 1 in which a silicone-based adhesive was applied on an inner liner that was contaminated with a release agent, adhesive failure, by which the sound absorbing material layer and the adhesive layer were separated after 70 hours, occurred.

On the other hand, in Example 1 in which an inner liner having any contaminants eliminated by irradiating with laser light, it was confirmed that the adhesive force was maintained not only at high temperature but also after aging, unlike Comparative Example 1 in which the inner liner was delaminated within 70 hours at 80°C.

Even after the high-speed driving test, the occurrence of delamination and loss was not observed. Therefore, it is anticipated that even if the same silicone-based adhesive is used, in a case in which the adhesive is applied on an uncontaminated inner liner, the adhesive force may be increased, and the loss of a sound absorbing material attached to the tire inner liner may be prevented.

Thus, preferred Examples of the invention have been explained in detail; however, the scope of rights of the present invention is not intended to be limited to these, and various modifications and improvements made by an ordinarily skilled person using the basic concept of the present invention as defined in the following Claims should also be construed to be included in the scope of rights of the present invention.

## Claims

1. A tire with reduced cavity noise, the tire comprising:
an inner liner;
an adhesive layer applied on the inner side of the inner liner; and
a sound absorbing material layer attached to the adhesive layer,
wherein the inner liner includes a laser light-treated surface.

2. The tire with reduced cavity noise according to claim 1, wherein the adhesive layer includes any one adhesive selected from the group consisting of a silicone-based adhesive, a polyether-based modified silane adhesive, an adhesive synthesized from a polyether-modified silane and urethane, a urethane-based adhesive, an acrylic adhesive, an epoxy-based adhesive, and a mixture of these.

3. The tire with reduced cavity noise according to claim 2, wherein the silicone-based adhesive contains a chemical structure represented by the following Chemical Formula (3): 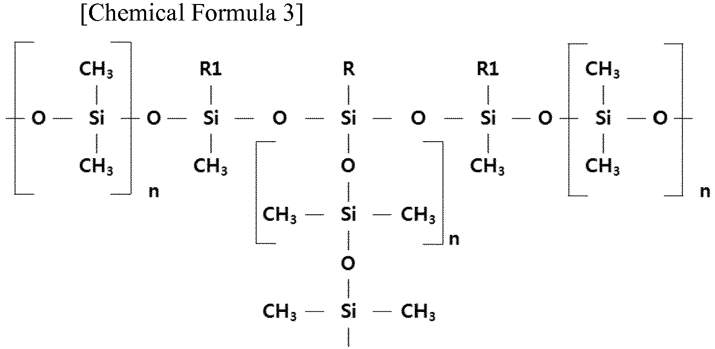 wherein R represents any one selected from the group consisting of a silanol group, an alkyl group, an aryl group, an alkoxy group, and an acryl group; R1 represents any one hydrolyzable group selected from the group consisting of an acetate, an alkoxy, an oxime, benzamide, and a combination thereof, or a hydrolyzable group containing an amine; and n represents an integer from 1 to 500.

4. The tire with reduced cavity noise according to any one of claims 1 to 3, wherein the sound absorbing material layer includes a polyurethane foam.

5. The tire with reduced cavity noise according to any one of claims 1 to 3, wherein the tire with reduced cavity noise does not have a release agent layer between the inner liner and the adhesive layer.

6. The tire with reduced cavity noise according to claim 1, wherein
the inner liner including a laser light-treated surface includes a structure-modified region formed by irradiating the surface of the inner liner with laser light, and
the structure-modified region has any one shape selected from a dot, a line, a plane, a plurality of dots, a plurality of lines, a plurality of planes, and a combination of these.

7. The tire with reduced cavity noise according to claim 6, wherein the structure-modified region is composed of a plurality of planes arranged at a certain interval along the circumferential direction of the tire.

8. The tire with reduced cavity noise according to claim 6, wherein
the structure-modified region is composed of planes, and
the tire includes the structure-modified region at a proportion of 20% to 80% by area with respect to the total area of the inner liner.

9. The tire with reduced cavity noise according to claim 1, wherein the laser is any one selected from the group consisting of a fiber laser, a diode laser, a diode pumped solid state (DPSS) laser, a krypton fluoride (KrF) excimer laser, an argon fluoride (ArF) excimer laser, a nanosecond laser, a femtosecond laser, an attosecond laser, and a carbon dioxide laser.

10. The tire with reduced cavity noise according to any one of claims 1 to 3, wherein
the tire with reduced cavity noise includes a release agent layer between the inner liner and the adhesive layer, and
the release agent layer includes a laser light-treated surface.

11. The tire with reduced cavity noise according to claim 10, wherein
the inner liner including a laser light-treated surface includes a structure-modified region formed by irradiating the surface of the inner liner with laser light, and
the structure-modified region has any one shape selected from the group consisting of a dot, a line, a plane, a plurality of dots, a plurality of lines, a plurality of planes, and a combination of these.

12. The tire with reduced cavity noise according to claim 11, wherein the structure-modified region has a shape composed of a plurality of planes arranged at a certain interval along the circumferential direction of the tire.

13. The tire with reduced cavity noise according to claim 11, wherein
the structure-modified region is composed of planes, and
the tire includes the structure-modified region at a proportion of 20% to 80% by area with respect to the total area of the inner liner.

14. The tire with reduced cavity noise according to claim 10, wherein the laser is any one selected from the group consisting of a fiber laser, a diode laser, a diode pumped solid state (DPSS) laser, a krypton fluoride (KrF) excimer laser, an argon fluoride (ArF) excimer laser, a nanosecond laser, a femtosecond laser, an attosecond laser, and a carbon dioxide laser.

15. A method for manufacturing a tire with reduced cavity noise, the method comprising:
a step of forming a green tire including an inner liner;
a step of placing the green tire over a bladder so that the inner liner and the bladder are in direct contact, without performing a step of applying a release agent on the inner liner inside the green tire, expanding the interior of the green tire using the bladder, and thereby producing a cured tire;
a step of irradiating the inner liner inside the cured tire with laser light;
a step of applying an adhesive on the surface of the inner liner and forming an adhesive layer; and
a step of attaching a sound absorbing material to the adhesive layer.

16. A method for manufacturing a tire with reduced cavity noise, the method comprising:
a step of forming a green tire including an inner liner;
a step of applying a release agent on the inner liner inside the green tire, subsequently placing the green tire over a bladder, expanding the interior of the green tire using the bladder, and thereby producing a cured tire;
a step of irradiating the inner liner inside the cured tire with laser light;
a step of applying an adhesive on the surface of the inner liner that has been irradiated with laser light and forming an adhesive layer; and
a step of attaching a sound absorbing material to the adhesive layer.

## Patentansprüche

1. Reifen mit reduziertem Hohlraumrauschen, wobei der Reifen umfasst:
eine innere Auskleidung;
eine Haftschicht, die auf die innere Seite der inneren Auskleidung aufgetragen ist; und
eine schallabsorbierende Materialschicht, die an der Haftschicht haftet, wobei die innere Auskleidung eine mit Laserlicht behandelte Oberfläche enthält.

2. Reifen mit reduziertem Hohlraumrauschen nach Anspruch 1, wobei die Haftschicht eines der Haftmittel enthält, das aus der Gruppe ausgewählt ist, die aus einem auf Silikon basierenden Haftmittel, einem auf Polyether basierenden modifizierten Silanhaftmittel, einem Haftmittel, das aus einem Polyether-modifizierten Silan und Urethan synthetisiert ist, aus einem auf Urethan basierenden Haftmittel, einem Acrylhaftmittel, einem auf Epoxid basierenden Haftmittel und aus einer Mischung derselben besteht.

3. Reifen mit reduziertem Hohlraumrauschen nach Anspruch 2, wobei das auf Silikon basierende Haftmittel eine chemische Struktur enthält, die durch die folgende chemische Formel (3) dargestellt ist: 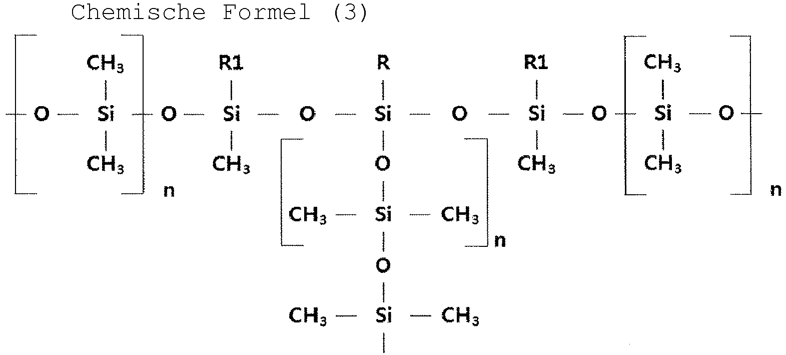 wobei R eine Verbindung darstellt, die aus der Gruppe ausgewählt ist, die aus einer Silanolgruppe, einer Alkylgruppe, einer Arylgruppe, einer Alkoxygruppe und einer Acrylgruppe besteht; R1 irgendeine hydrolysierbare Gruppe darstellt, die aus der Gruppe ausgewählt ist, die aus einem Acetat, einem Alkoxy, einem Oxim, einem Benzamid und aus einer Kombination derselben besteht, oder wobei R1 eine hydrolysierbare Gruppe darstellt, die ein Amin enthält; und wobei n eine ganze Zahl von 1 bis 500 darstellt.

4. Reifen mit reduziertem Hohlraumrauschen nach einem der Ansprüche 1 bis 3, wobei die schallabsorbierende Materialschicht einen Polyurethanschaumstoff enthält.

5. Reifen mit reduziertem Hohlraumrauschen nach einem der Ansprüche 1 bis 3, wobei der Reifen mit reduziertem Hohlraumrauschen schallabsorbierende Materialschicht keine Trennmittelschicht zwischen der inneren Auskleidung und der Haftschicht aufweist.

6. Reifen mit reduziertem Hohlraumrauschen nach Anspruch 1, wobei die innere Auskleidung, die eine mit Laserlicht behandelte Oberfläche enthält, einen struktur-modifizierten Bereich enthält, der durch Bestrahlen der Oberfläche der inneren Auskleidung mit Laserlicht gebildet ist, und
wobei der struktur-modifizierte Bereich eine der Formen aufweist, die ausgewählt ist aus einem Punkt, einer Linie, einer Ebene, mehreren Punkten, mehreren Linien, mehreren Ebenen und aus einer Kombination derselben.

7. Reifen mit reduziertem Hohlraumrauschen nach Anspruch 6, wobei der struktur-modifizierte Bereich aus mehreren Ebenen zusammengesetzt ist, die in einem bestimmten Intervallabstand entlang der Umfangsrichtung des Reifens angeordnet sind.

8. Reifen mit reduziertem Hohlraumrauschen nach Anspruch 6, wobei
der struktur-modifizierte Bereich aus Ebenen zusammengesetzt ist, und
wobei der Reifen den struktur-modifizierten Bereich mit einem Flächenanteil von 20 % bis 80 % bezogen auf die Gesamtfläche der inneren Auskleidung enthält.

9. Reifen mit reduziertem Hohlraumrauschen nach Anspruch 1, wobei der Laser aus der Gruppe ausgewählt ist, die aus einem Faserlaser, einem Diodenlaser, einem diodengepumpten Feststofflaser (DPSS-Laser = diode pumped solid state laser), einem Excimerlaser aus Kryptonfluorid (KrF), einem Excimerlaser aus Argonfluorid (ArF), einem Nanosekundenlaser, einem Femtosekundenlaser, einem Attosekundenlaser und einem Kohlenstoffdioxidlaser besteht.

10. Reifen mit reduziertem Hohlraumrauschen nach einem der Ansprüche 1 bis 3, wobei
der Reifen mit reduziertem Hohlraumrauschen eine Trennmittelschicht zwischen der inneren Auskleidung und der Haftschicht enthält, und
die Trennmittelschicht eine mit Laserlicht behandelte Oberfläche enthält

11. Reifen mit reduziertem Hohlraumrauschen nach Anspruch 10, wobei
die innere Auskleidung, die eine mit Laserlicht behandelte Oberfläche enthält, einen struktur-modifizierten Bereich enthält, der durch Bestrahlen der Oberfläche der inneren Auskleidung mit Laserlicht gebildet ist, und
wobei der struktur-modifizierte Bereich eine der Formen aufweist, die aus der Gruppe ausgewählt ist, die aus einem Punkt, einer Linie, einer Ebene, mehreren Punkten, mehreren Linien, mehreren Ebenen und aus einer Kombination derselben besteht.

12. Reifen mit reduziertem Hohlraumrauschen nach Anspruch 11, wobei der struktur-modifizierte Bereich eine Form aufweist, die aus mehreren Ebenen zusammengesetzt ist, die in einem bestimmten Intervallabstand entlang der Umfangsrichtung des Reifens angeordnet sind.

13. Reifen mit reduziertem Hohlraumrauschen nach Anspruch 11, wobei
der struktur-modifizierte Bereich aus Ebenen zusammengesetzt ist, und
wobei der Reifen den struktur-modifizierten Bereich mit einem Flächenanteil von 20 % bis 80 % bezogen auf die Gesamtfläche der inneren Auskleidung enthält.

14. Reifen mit reduziertem Hohlraumrauschen nach Anspruch 10, wobei der Laser aus der Gruppe ausgewählt ist, die aus einem Faserlaser, einem Diodenlaser, einem diodengepumpten Feststofflaser (DPSS-Laser), einem Excimerlaser aus Kryptonfluorid (KrF), einem Excimerlaser aus Argonfluorid (ArF), einem Nanosekundenlaser, einem Femtosekundenlaser, einem Attosekundenlaser und einem Kohlenstoffdioxidlaser besteht.

15. Verfahren zum Herstellen eines Reifens mit reduziertem Hohlraumrauschen, wobei das Verfahren umfasst:
einen Schritt zum Herstellen eines Reifenrohlings, der eine innere Auskleidung enthält;
einen Schritt zum Anordnen des Reifenrohlings über einer Blase, so dass sich die innere Auskleidung und die Blase in einem direkten Kontakt befinden, ohne dabei einen Schritt eines Auftragens eines Trennmittels auf die innere Auskleidung innerhalb des Reifenrohlings durchzuführen, Ausdehnen des Inneren des Reifenrohlings unter Verwendung der Blase, und dadurch Herstellen eines gehärteten Reifens;
einen Schritt zum Bestrahlen der inneren Auskleidung innerhalb des gehärteten Reifens mit Laserlicht;
einen Schritt zum Auftragen eines Klebemittels auf die Oberfläche der inneren Auskleidung und Bilden einer Haftschicht; und
einen Schritt zum Befestigen eines schallabsorbierenden Materials an der Haftschicht.

16. Verfahren zum Herstellen eines Reifens mit reduziertem Hohlraumrauschen, wobei das Verfahren umfasst:
einen Schritt zum Bilden eines Reifenrohlings, der eine innere Auskleidung enthält;
einen Schritt eines Auftragens eines Trennmittels auf die innere Auskleidung innerhalb des Reifenrohlings, anschließend Anordnen des Reifenrohlings über einer Blase, Ausdehnen des Inneren des Reifenrohlings unter Verwendung der Blase, und dadurch Herstellen eines gehärteten Reifens;
einen Schritt zum Bestrahlen der inneren Auskleidung innerhalb des gehärteten Reifens mit Laserlicht;
einen Schritt zum Auftragen eines Klebemittels auf die Oberfläche der inneren Auskleidung, die mit Laserlicht bestrahlt worden ist, und Bilden einer Haftschicht; und
einen Schritt zum Befestigen eines schallabsorbierenden Materials an der Haftschicht.

## Revendications

1. Pneumatique à bruit de cavité réduit, le pneumatique comprenant :
une doublure intérieure ;
une couche adhésive appliquée sur le côté intérieur de la doublure intérieur ; et
une couche de matériau d'insonorisation fixée à la couche adhésive,
dans lequel la doublure intérieure comprend une surface traitée par lumière laser.

2. Pneumatique à bruit de cavité réduit selon la revendication 1, dans lequel la couche adhésive comprend un quelconque adhésif choisi dans le groupe constitué d'un adhésif à base de silicone, d'un adhésif au silane modifié à base de polyéther, d'un adhésif synthétisé à partir d'un silane modifié au polyéther et d'uréthane, d'un adhésif à base d'uréthane, un adhésif acrylique, d'un adhésif à base d'époxy, et d'un mélange de ceux-ci.

3. Pneumatique à bruit de cavité réduit selon la revendication 2, dans lequel l'adhésif à base de silicone contient une structure chimique représentée par la formule chimique suivante (3) : 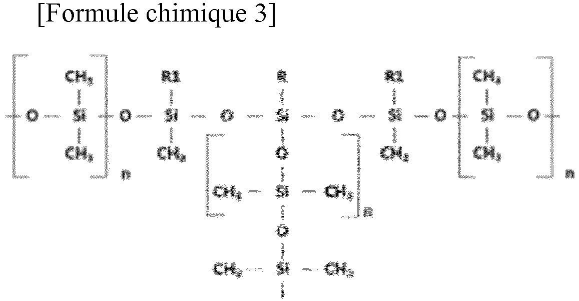 dans lequel R représente un quelconque choisi dans le groupe constitué d'un groupe silanol, d'un groupe alkyle, d'un groupe aryle, d'un groupe alcoxy et d'un groupe acrylique ; R1 représente un groupe hydrolysable quelconque choisi dans le groupe constitué d'un acétate, d'un alcoxy, d'une oxime, d'un benzamide, et d'une combinaison de ceux-ci, ou d'un groupe hydrolysable contenant une aminé ; et n représente un entier de 1 à 500.

4. Pneumatique à bruit de cavité réduit selon l'une quelconque des revendications 1 à 3,
dans lequel la couche de matériau d'insonorisation comprend une mousse de polyuréthane.

5. Pneumatique à bruit de cavité réduit selon l'une quelconque des revendications 1 à 3, dans lequel le pneumatique à bruit de cavité réduit ne comporte pas de couche d'agent anti-adhésif entre la doublure intérieure et la couche adhésive.

6. Pneumatique à bruit de cavité réduit selon la revendication 1, dans lequel
La doublure intérieure comprenant une surface traitée par lumière laser comprend une région à structure modifiée formée en irradiant la surface de la doublure intérieure avec une lumière laser, et
la région à structure modifiée a une forme quelconque choisie parmi un point, une ligne, un plan, une pluralité de points, une pluralité de lignes, une pluralité de plans, et une combinaison de ceux-ci.

7. Pneumatique à bruit de cavité réduit selon la revendication 6, dans lequel la région à structure modifiée est composée d'une pluralité de plans agencés à un certain intervalle le long de la direction circonférentielle du pneumatique.

8. Pneumatique à bruit de cavité réduit selon la revendication 6, dans lequel la région à structure modifiée est composée de plans, et
le pneumatique comprend la région à structure modifiée dans une proportion de 20 % à 80 % par surface par rapport à la surface totale de la doublure intérieure.

9. Pneumatique à bruit de cavité réduit selon la revendication 1, dans lequel le laser est un quelconque choisi dans le groupe constitué d'un laser à fibre, d'un laser à diode, d'un laser à l'état solide pompé par diode (DPSS), d'un laser à excimère au fluorure de krypton (KrF), d'un laser à excimère au fluorure d'argon (ArF), d'un laser nanoseconde, un laser femtoseconde, un laser attoseconde et un laser à dioxyde de carbone.

10. Pneumatique à bruit de cavité réduit selon l'une quelconque des revendications 1 à 3, dans lequel
le pneumatique à bruit de cavité réduit comprend une couche d'agent anti-adhésif entre la doublure intérieure et la couche adhésive, et
la couche d'agent anti-adhésif comprend une surface traitée par lumière laser.

11. Pneumatique à bruit de cavité réduit selon la revendication 10, dans lequel
la doublure intérieure comprenant une surface traitée par lumière laser comprend une région à structure modifiée formée en irradiant la surface de la doublure intérieure avec une lumière laser, et
la région à structure modifiée a une forme quelconque choisie dans le groupe comprenant un point, une ligne, un plan, une pluralité de points, une pluralité de lignes, une pluralité de plans, et une combinaison de ceux-ci.

12. Pneumatique à bruit de cavité réduit selon la revendication 11, dans lequel la région à structure modifiée a une forme composée d'une pluralité de plans agencés à un certain intervalle le long de la direction circonférentielle du pneumatique.

13. Pneumatique à bruit de cavité réduit selon la revendication 11, dans lequel
la région à structure modifiée est composée de plans, et
le pneumatique comprend la région à structure modifiée dans une proportion de 20 % à 80 % par surface par rapport à la surface totale de la doublure intérieure.

14. Pneumatique à bruit de cavité réduit selon la revendication 10, dans lequel le laser est l'un quelconque choisi dans le groupe constitué d'un laser à fibre, d'un laser à diode, d'un laser à l'état solide pompé par diode (DPSS), d'un laser à excimère au fluorure de krypton (KrF), d'un laser à excimère au fluorure d'argon (ArF), d'un laser nanoseconde, un laser femtoseconde, un laser attoseconde et un laser à dioxyde de carbone.

15. Méthode de fabrication d'un pneumatique à bruit de cavité réduit, la méthode comprenant :
une étape de formation d'un pneumatique vert comprenant une doublure intérieure ;
une étape de mise en place du pneumatique vert sur une vessie de manière à ce que la doublure intérieure et la vessie soient en contact direct, sans effectuer l'étape consistant à appliquer un agent anti-adhésif sur la doublure intérieure à l'intérieur du pneumatique vert, à agrandir l'intérieur du pneumatique vert à l'aide de la vessie, et à produire ainsi un pneumatique durci ;
une étape d'irradiation de la doublure intérieure à l'intérieur du pneumatique durci avec une lumière laser ;
une étape d'application d'un adhésif sur la surface de la doublure intérieure et de formation d'une couche adhésive ; et
une étape de fixation d'un matériau d'insonorisation sur la couche adhésive.

16. Méthode de fabrication d'un pneumatique à bruit de cavité réduit, la méthode comprenant :
une étape de formation d'un pneumatique vert comprenant une doublure intérieure ;
une étape d'application d'un agent anti-adhésif sur la doublure intérieure à l'intérieur du pneumatique vert, ensuite de mise en place du pneumatique vert sur une vessie, d'agrandissement de l'intérieur du pneumatique vert à l'aide de la vessie, et ainsi de production un pneumatique durci ;
une étape d'irradiation de la doublure intérieure à l'intérieur du pneumatique durci avec une lumière laser ;
une étape d'application d'un adhésif sur la surface de la doublure intérieure qui a été irradiée avec une lumière laser et de formation d'une couche adhésive ; et
une étape de fixation d'un matériau d'insonorisation sur la couche adhésive.
